# EUROPEAN PATENT SPECIFICATION

(11) **EP 2 469 818 B1**
(45) Date of publication and mention of the grant of the patent: **10.08.2016**
(21) Application number: 11739387.6
(22) Date of filing: 28.01.2011
(51) Int. Cl.: G06F 9/44, G06F 9/445, H04M 1/725

(54) **DYNAMIC DISPLAY METHOD FOR APPLICATION PROGRAM INTERFACE AND DEVICE THEREOF**
DYNAMISCHES ANZEIGEVERFAHREN FÜR EINE ANWENDUNGSPROGRAMMSCHNITTSTELLE UND VORRICHTUNG DAFÜR
PROCÉDÉ D'AFFICHAGE DYNAMIQUE POUR INTERFACE DE PROGRAMME D'APPLICATION ET DISPOSITIF ASSOCIÉ À CELUI-CI

(30) Priority: 04.02.2010 CN 201010109037
(43) Date of publication of application: 27.06.2012
(60) Divisional application: 16162131.3
(73) Proprietor: Huawei Device Co., Ltd., Longgang District Shenzhen Guangdong 518129 (CN)
(72) Inventor: ZHANG, Ying, Shenzhen Guangdong 518129 (CN)
(74) Representative: Kreuz, Georg Maria
(86) International application number: PCT/CN2011/070726
(87) International publication number: WO 2011/095108

(56) References cited:
- CN-A- 1 581 800
- CN-A- 101 222 710
- CN-A- 101 778 169
- CN-K1- 1 581 800
- US-A1- 2008 153 473
- US-A1- 2009 064 038

## Description

### FIELD OF THE INVENTION

The present invention relates to the field of communications technologies, and in particular, to a method and an apparatus for dynamic display of an application interface.

### BACKGROUND OF THE INVENTION

Currently, when an external application is installed onto a mobile phone, for example, a BREW (Binary Runtime Environment for Wireless) application is downloaded from Mshop (an online shopping mall system) and is installed onto the mobile phone, generally the display strings of the external application which is similar to the display strings of a JAVA game can only be displayed on one or several interfaces separately and cannot be displayed in an integrated manner in a menu of a local application of the mobile phone.

The technical solutions provided by the prior art to display the display strings of an external application, such as the display strings of the foregoing BREW application, in an integrated manner in a menu of a local application of the mobile phone, are all methods of writing codes statically, that is, directly hard coding the external application into the codes of the local application.

CN1581800A discloses a method of supporting multiple languages dynamically for SMAP in intelligent network, and particularly describes a processing steps of display dynamically for SMAP, wherein processing steps comprises as follows: when system starts, an information processing module of SMAP client reads a corresponding configuration to a memory table according to the language configuration, starts service management agent point module to generate display interface, reads corresponding display information from configuration file of memory table according to character string identifier defined in each object on the display interface, at last outputs the display information on the object of display interface.

US2008/0153473A1 relates to the display of items stored in memory of a mobile communication device. In particular US2008/0153473A1 recites that (see paragraphs [0015]-0016]) the application file 300 contains a descriptor 304. The descriptor includes one or more menu parameter sets 306, 308. Among the menu parameters there are a standardized menu category and an application name. Furthermore Lorenzo recites that (see paragraph [0023]) the mobile communication device also associate any launch parameters with the application name so that the launch parameters will be used to launch the application when selected from the custom menu.

However the prior art has the following disadvantage:
Although the methods of writing codes statically may integrate the display strings of the external application into the menu of the local application of the mobile phone, the methods of writing codes statically cannot dynamically display the display strings of the external application on a UI (User Interface) of the mobile phone.

### SUMMARY OF THE INVENTION

An embodiment of the present invention provides a method for dynamic display of an application interface for implementing the dynamic display of the application interface. The method includes:
parsing a configuration file of a first application to obtain a display string identifier of the first application;
reading at least one display string of the first application from a resource file of the first application according to the display string identifier; and
dynamically displaying the at least one display string on the application interface;
where the first application has a plurality of operations, each of the at least one display string is associated with one of the plurality of operations, and the association of each of the at least one display string of the first application with the one of the plurality of operations is preconfigured in the configuration file of the first application;
where when the configuration file of the first application is parsed, a second application is further determined; and
the dynamically displaying the display string on the local application interface includes: updating an interface of the second application according to the display string; and displaying an updated interface of the second application, wherein the updating the interface of the second application according to the display string includes:
   integrating the display string into the interface of the second application, where:
      when the configuration file of the first application is parsed, first indication information for indicating an operation to be executed by the first application and second indication information for indicating data that needs to be transferred for executing the operation are further obtained; and
      after integrating the display string into the interface of the second application, the method further comprises: obtaining, according to the second indication information, the data that needs to be transferred for executing the operation; and transferring the data that needs to be transferred for the operation and the first indication information to the first application, so as to trigger the first application to execute the operation.

An embodiment of the present invention also provides an apparatus for dynamic display of an application interface for implementing the dynamic display of the application interface. The apparatus includes:
a parsing module, configured to parse a configuration file of a first application to obtain a display string identifier of the first application;
a reading module, configured to read at least one display string of the first application from a resource file of the first application according to the display string identifier; and
a display controlling module, configured to dynamically display the at least one display string on the application interface;
where the first application has a plurality of operations, each of the at least one display string is associated with one of the plurality of operations, and the association of each of the at least one display string of the first application with the one of the plurality of operations is preconfigured in the configuration file of the first application,
where the parsing module is further configured to parse the configuration file of the first application to determine a second application; and
the display controlling module is specifically configured to: update an interface of the second application according to the display string; and display an updated interface of the second application, wherein the display controlling module is further configured to: integrate the display string into the interface of the second application,
where the parsing module is further configured to parse the configuration file of the first application to obtain first indication information for indicating an operation to be executed by the first application and second indication information for indicating data that needs to be transferred for executing the operation; and
the apparatus further includes:
   an obtaining module, configured to obtain according to the second indication information, after the display controlling module integrates the display string into the interface of the second application, the data that needs to be transferred for executing the operation; and
   a triggering module, configured to transfer the data that needs to be transferred for the operation and the first indication information to the first application, so as to trigger the first application to execute the operation.

In the embodiments of the present invention, the configuration file of the first application is parsed to obtain the display string identifier of the first application; the display string of the first application is read from the resource file of the first application according to the display string identifier; and the display string is dynamically displayed on the application interface. As compared with the technical solutions of the prior art for statically writing application codes, the embodiments of the present invention may implement the dynamic display of the application interface.

### BRIEF DESCRIPTION OF THE DRAWINGS

To make the technical solutions of the embodiments of the present invention clearer, the accompanying drawings used in the description of the embodiments are briefly described below. Evidently, the accompanying drawings illustrate only some exemplary embodiments of the present invention and persons skilled in the art may obtain other drawings based on these drawings without creative efforts. In the drawings:
FIG 1 is a processing flowchart of a method for dynamic display of an application interface according to an embodiment of the present invention;
FIG 2 is a processing flowchart of a specific example of the method for dynamic display of an application interface according to an embodiment of the present invention;
FIG 3 is a schematic structural diagram of an apparatus for dynamic display of an application interface according to an embodiment of the present invention;
FIG 4 is a schematic structural diagram of a specific example of the apparatus for dynamic display of an application interface as shown in FIG 3 according to an embodiment of the present invention; and
FIG. 5 is a schematic structural diagram of a specific example of the apparatus for dynamic display of an application interface as shown in FIG 3 according to an embodiment of the present invention.

### DETAILED DESCRIPTION OF THE EMBODIMENTS

To make the objects, technical solutions, and advantages of the embodiments of the present invention clearer, the embodiments of the present invention are described below in detail with reference to the accompanying drawings. Here, the illustrative embodiments of the present invention and the description thereof are intended to explain the present invention, but are not intended to limit the present invention.

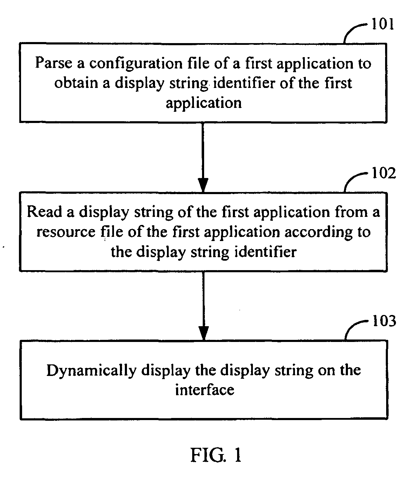

As shown in FIG 1, in an embodiment of the present invention, the processing procedure of a method for dynamic display of an application interface may include the following steps:
Step 101: Parse a configuration file of a first application to obtain a display string identifier of the first application.
Step 102: Read a display string of the first application from a resource file of the first application according to the display string identifier.
Step 103: Dynamically display the display string on the application interface.

As may be known from the procedure shown in FIG 1, in the embodiment of the present invention, the configuration file of the first application is parsed to obtain the display string identifier of the first application; the display string of the first application is read from the resource file of the first application according to the display string identifier; and the display string is dynamically displayed on the application interface. As compared with the technical solutions of the prior art for statically writing application codes, the embodiment of the present invention may implement the dynamic display of the application interface.

In specific implementation, the first application as shown in FIG 1 may be a BREW application, and of course, may also be an application of other types, such as a JAVA application. The display interface for dynamically displaying the display string of the first application may be an options (Options) menu interface, and of course may also be an interface in other forms, such as an interface in the form of a list. The apparatus for executing the method as described in FIG 1 may be a terminal device, and of course, may also be a device of other types, such as a network device. For example, if the apparatus is a mobile phone, the first application is a BREW application, and the display interface is an options menu interface, the embodiment of the present invention may dynamically display a display string of the BREW application on the options menu interface of the mobile phone.

In one embodiment, during the dynamic display of the display string of the first application, it may be considered that the display string of the first application is displayed in an integrated manner on an interface of a second application, so that a better display effect of the display string of the application is achieved, that is, display strings of different applications are displayed on one interface, thus facilitating the operation of a user. For example, if the first application is a BREW application newly downloaded by the mobile phone, and the second application is a local application of the mobile phone, to display the display string of the BREW application in an integrated manner on the interface of the local application of the mobile phone may facilitate the operation of the user of the mobile phone.

In specific implementation, step 103 may specifically be implemented as follows: determining a second application; updating an interface of the second application according to the display string; displaying the updated interface of the second application; where, the second application is determined by parsing the configuration file of the first application.

Updating the interface of the second application according to the display string of the first application may be implemented in a variety of ways, such as displaying the display string of the first application in an integrated manner on the interface of the second application, so as to implement the dynamic display of the first application on the interface of the second application.

In one embodiment, updating the interface of the second application according to the display string of the first application may specifically be implemented as follows: integrating the display string on the interface of the second application.

An example is given below to describe how to integrate the display string of the first application on the interface of the second application. In this example, the first application is a BREW application newly downloaded by the mobile phone, the second application is a local application of the mobile phone, and the options menu of the BREW application is dynamically added to the original options menu interface of the local application of the mobile phone, so as to implement the integration of the BREW application and the local application of the mobile phone.

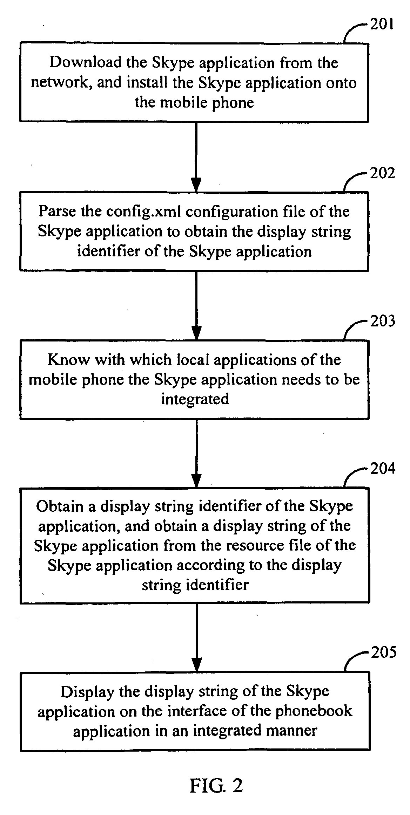

As shown in FIG 2, the processing procedure for displaying the display string of the first application in an integrated manner on the interface of the second application in this example may include the following steps:
Step 201: Download the first application from the network, namely the BREW application, and install the first application onto the mobile phone.

The following description takes a Skype application as an example of the BREW application, and in specific implementation, the Skype application may be downloaded from MShop. The Skype application has a configuration file config.xml, and this configuration file may be used for configuring how to display the Skype application in the local application of the mobile phone in an integrated manner.

The following gives an example of configuring the options menu interface in a segment of the config.xml configuration file:

```
     <phonebook position="64" level="high">
        <optionsMenu enableGroup="true" menuLabel="1062">
          <item>
             <command labelId="1063">
               <api parameterType="1" apild="32" extension="0"/>
             </command>
          </item>
          <item>
             <command labelId="1064">
               <api parametertype="1" apiId="27" extension=" 1"/>
             </command>
          </item>
          <item>
             <command labelId="1065">
               <api parameterType=" 1" apiId="31" extension="1"/>
             </command>
          </item>
        </optionsMenu>
    </phonebook>
```

Each item in the above example represents a menu item, and as may be seen, the above example has a total of three menu items. enableGroup=true means that the three menu items are all second-level menus, and enableGroup=false means that the three menu items are all first-level menus. menuLabel in optionsMenu and labelId in command are all display string identifiers (IDs) of the Skype application in the options menu, and the display strings of the Skype application may be read from a resource file (.bar file) of the Skype application according to corresponding display string identifiers.

Step 202: Parse the config.xml configuration file of the Skype application after the Skype application is downloaded and installed onto the mobile phone. In specific implementation, the data obtained by parsing the configuration file may be saved in a database. The display string identifier of the Skype application may be obtained by parsing.

Step 203: After the config.xml configuration file is parsed, know with which local applications of the mobile phone the Skype application needs to be integrated, that is, determine the second application. As may be seen from the example of the config.xml configuration given above, the Skype application needs to be integrated with the local phonebook application phonebook of the mobile phone.

Step 204: Obtain a display string identifier of the Skype application from a database, and obtain a display string of the Skype application from the resource file of the Skype application according to the display string identifier.

Step 205: Update the interface of the local phonebook application of the mobile phone according to the display string of the Skype application, that is, display the display string of the Skype application on the interface of the phonebook application in an integrated manner.

In this example, the config.xml configuration file may be modified, that is, the display string identifier of the Skype application in the config.xml configuration file may be modified; of course, in the resource file of the Skype application, the display string of the Skype application may also be modified; the display string may be dynamically obtained according to the display string identifier to implement the dynamic display of the Skype application. In the prior art, the codes of the external application can only be written statically into the codes of the local application of the mobile phone, and these codes cannot be modified, so that the dynamic display of the external application cannot be implemented.

After the display string of the first application is displayed on the interface of the second application in an integrated manner, the first application may be operated and executed on the interface of the second application. There may be many specific operation and execution methods, and an example is given below for description.

In this example, when the configuration file of the first application is parsed, first indication information for indicating an operation to be executed by the first application, and second indication information for indicating data that needs to be transferred for executing the operation may also be obtained.

After the display string is displayed on the interface of the second application in an integrated manner, the following execution step of the first application may also be included:
obtaining, according to the second indication information, the data that needs to be transferred for executing the operation; and
transferring the data that needs to be transferred for the operation and the first indication information to the first application to trigger the first application to execute the operation.

Still by taking the config.xml configuration file provided in the procedure shown in FIG 2 as an example, it may be known that each menu item has an apiId, parameterType, and extension, in which apiId is the first indication information and represents the operation executed by the Skype application after this menu item is clicked; parameterType is the second indication information and represents what data needs to be transferred for the Skype application to execute the operation, for example, parameterType may be PARAMETER_TYPE_PHONENUMBER or PARAMETER_TYPE_EMAIL, which respectively represents the phone number and the emailaddress of a current contact; extension is an extension parameter and its value range may be integers.

After the user selects a dynamic menu item, the data that needs to be transferred is obtained according to the parameterType of this menu item, and the data and the apiId of the menu item are transferred to the Skype application by means of ISHELL_SendEvent. Of course, extension may also be transferred to the Skype application. Therefore, after receiving the event, the Skype application is triggered to execute a corresponding operation according to received data and apiId.

In another embodiment, after the display string of the first application is displayed on the interface of the second application in an integrated manner, the first application may also be uninstalled and the display string that has been integrated into the interface of the second application may also be deleted. For example, the Skype application is uninstalled from the mobile phone, and in the implementation, after the Skype application is uninstalled, dynamic menu items relating to the Skype application need to be deleted from the interface of the local phonebook application of the mobile phone. In this way, not only the display string of the first application may be displayed on the interface of the second application in an integrated manner, but also the display string of the first application may be deleted from the interface of the second application, so that the dynamic display of the first application on the interface of the second application becomes more flexible.

Persons skilled in the art may understand that all or part of steps in the methods of the foregoing embodiments may be implemented by relevant hardware instructed by a program. The program may be stored in a computer readable storage medium, and when executed, the program may include all or part of steps of the methods of the foregoing embodiments; and the storage medium may include a ROM, a RAM, a magnetic disk, and a CD-ROM.

An embodiment of the present invention also provides an apparatus for dynamic display of an application interface, as described in the embodiment below. Because the problem-solving principle of the apparatus is similar to the method for dynamic display of an application interface, reference may be made to the implementation of the method, and repeated description is omitted here.

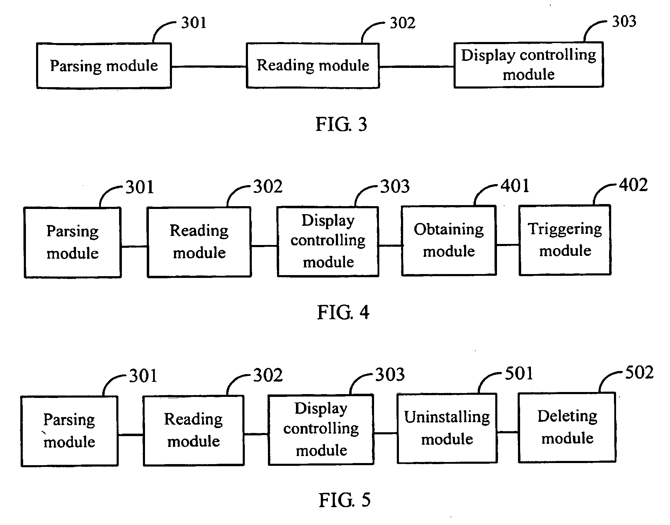

As shown in FIG 3, in an embodiment of the present invention, the apparatus for dynamic display of an application interface may include:
a parsing module 301, configured to parse a configuration file of a first application to obtain a display string identifier of the first application;
a reading module 302, configured to read a display string of the first application from a resource file of the first application according to the display string identifier; and
a display controlling module 303, configured to dynamically display the display string on the application interface.

In one embodiment, the display controlling module 303 may specifically be configured to: determine a second application; update an interface of the second application according to the display string; and display the updated interface of the second application.

In one embodiment, the display controlling module 303 may specifically be configured to: display the display string on the interface of the second application in an integrated manner.

In one embodiment, the parsing module 301 may also be configured to parse the configuration file of the first application to obtain first indication information for indicating an operation to be executed by the first application, and second indication information for indicating data that needs to be transferred for executing the operation.

As shown in FIG 4, the apparatus as shown in FIG 3 may also include:
an obtaining module 401, configured to, after the display controlling module 303 displays the display string on the interface of the second application in an integrated manner, obtain, according to the second indication information, the data to be transferred for executing the operation; and
a triggering module 402, configured to transfer the data and the first indication information to the first application to trigger the first application to execute the operation.

As shown in FIG 5, in one embodiment, the apparatus as shown in FIG 3 may also include:
an uninstalling module 501, configured to uninstall the first application after the display controlling module 303 displays the display string on the interface of the second application in an integrated manner; and
a deleting module 502, configured to delete the display string that has been integrated into the interface of the second application.

As may be known from the foregoing embodiment, in the embodiment of the present invention, the configuration file of the first application is parsed to obtain the display string identifier of the first application; the display string of the first application is read from the resource file of the first application according to the display string identifier; and the display string is dynamically displayed on the interface. As compared with the technical solutions of the prior art for statically writing application codes, the embodiment of the present invention may implement the dynamic display of the application interface.

The embodiment of the present invention may also display the display string of the first application on the interface of the second application in an integrated manner, so that the display strings of different applications are displayed on one interface to achieve a better display effect of the display strings of the applications and facilitate the operation of the user.

The embodiment of the present invention may also display the display string of the first application on the interface of the second application in an integrated manner, so that the display strings of different applications are displayed on one interface to achieve a better display effect of the display strings of the applications and facilitate the operation of the user. interfaces; and may not only implement the dynamic display of the display strings of the BREW application, but also implement the dynamic display of the display strings of other applications such as JAVA.

The foregoing embodiments describe the objects, technical solutions, and beneficial effects of the present invention in detail. It should be understood that the above descriptions are merely exemplary embodiments of the present invention, but not intended to limit the protection scope of the present invention. Any modification, equivalent substitution, improvement, and so on within the idea and principle of the present invention shall be included in the protection scope of the present invention.

## Claims

1. A method for dynamic display of a local application interface, comprising:
parsing (101) a configuration file of a first application to obtain a display string identifier of the first application;
reading (102) at least one display string of the first application from a resource file of the first application according to the display string identifier; and
dynamically displaying (103) the at least one display string on the local application interface;
**characterised in that**
the first application has a plurality of operations, each of the at least one display string is associated with one of the plurality of operations, and the association of each of the at least one display string of the first application with the one of the plurality of operations is preconfigured in the configuration file of the first application, wherein:
when the configuration file of the first application is parsed, a second application is further determined; and
the dynamically displaying the display string on the local application interface comprises: updating an interface of the second application according to the display string; and displaying an updated interface of the second application, wherein the updating the interface of the second application according to the display string comprises:
integrating the display string into the interface of the second application, wherein:
when the configuration file of the first application is parsed, first indication information for indicating an operation to be executed by the first application and second indication information for indicating data that needs to be transferred for executing the operation are further obtained; and
after integrating the display string into the interface of the second application, the method further comprises: obtaining, according to the second indication information, the data that needs to be transferred for executing the operation; and transferring the data that needs to be transferred for the operation and the first indication information to the first application, so as to trigger the first application to execute the operation.

2. The method according to claim 1, wherein after the integrating the display string into the interface of the second application, the method further comprises:
uninstalling the first application; and
deleting the display string that has been integrated into the interface of the second application.

3. An apparatus for dynamic display of a local application interface, comprising:
a parsing module (301), configured to parse a configuration file of a first application to obtain a display string identifier of the first application;
a reading module (302), configured to read at least one display string of the first application from a resource file of the first application according to the display string identifier; and
a display controlling module (303), configured to dynamically display the at least one display string on the local application interface;
**characterised in that**
the first application has a plurality of operations, each of the at least one display string is associated with one of the plurality of operations, and the association of each of the at least one display string of the first application with the one of the plurality of operations is preconfigured in the configuration file of the first application, wherein:
the parsing module is further configured to parse the configuration file of the first application to determine a second application; and
the display controlling module is specifically configured to: update an interface of the second application according to the display string; and display an updated interface of the second application, wherein the display controlling module is further configured to: integrate the display string into the interface of the second application, wherein:
the parsing module is further configured to parse the configuration file of the first application to obtain first indication information for indicating an operation to be executed by the first application and second indication information for indicating data that needs to be transferred for executing the operation; and
the apparatus further comprises:
an obtaining module (401), configured to obtain according to the second indication information, after the display controlling module integrates the display string into the interface of the second application, the data that needs to be transferred for executing the operation; and
a triggering module (402), configured to transfer the data that needs to be transferred for the operation and the first indication information to the first application, so as to trigger the first application to execute the operation.

4. The apparatus according to claim 3, further comprising:
an uninstalling module (501), configured to uninstall the first application after the display controlling module integrates the display string into the interface of the second application; and
a deleting module (502), configured to delete the display string that has been integrated into the interface of the second application.

## Patentansprüche

1. Verfahren zum dynamischen Anzeigen einer lokalen Anwendungsschnittstelle, das Folgendes umfasst:
Analysieren (101) einer Konfigurationsdatei einer ersten Anwendung, um eine Anzeigezeichenkettenkennung der ersten Anwendung zu erhalten;
Lesen (102) wenigstens einer Anzeigezeichenkette der ersten Anwendung aus einer Betriebsmitteldatei der ersten Anwendung gemäß der Anzeigezeichenkettenkennung;
und
dynamisches Anzeigen (103) der wenigstens einen Anzeigezeichenkette auf der lokalen Anwendungsschnittstelle;
**dadurch gekennzeichnet, dass**
die erste Anwendung mehrere Operationen aufweist, wobei jede der wenigstens einen Anzeigezeichenkette einer der mehreren Operationen zugeordnet ist und die Zuordnung jeder der wenigstens einen Anzeigezeichenkette der ersten Anwendung zu der einen der mehreren Operationen in der Konfigurationsdatei der ersten Anwendung vorkonfiguriert ist, wobei:
wenn die Konfigurationsdatei der ersten Anwendung analysiert wird, ferner eine zweite Anwendung bestimmt wird; und
das dynamische Anzeigen der Anzeigezeichenkette auf der lokalen Anwendungsschnittstelle Folgendes umfasst: Aktualisieren einer Schnittstelle der zweiten Anwendung gemäß der Anzeigezeichenkette; und Anzeigen einer aktualisierten Schnittstelle der zweiten Anwendung, wobei das Aktualisieren der Schnittstelle der zweiten Anwendung gemäß der Anzeigezeichenkette Folgendes umfasst:
Integrieren der Anzeigezeichenkette in die Schnittstelle der zweiten Anwendung, wobei:
wenn die Konfigurationsdatei der ersten Anwendung analysiert wird, ferner erste Angabeinformationen zum Angeben einer Operation, die durch die erste Anwendung ausgeführt werden soll, und zweite Angabeinformationen zum Angeben von Daten, die zum Ausführen der Operation übertragen werden müssen, erhalten werden; und
das Verfahren nach dem Integrieren der Anzeigezeichenkette in die Schnittstelle der zweiten Anwendung ferner Folgendes umfasst: Erhalten gemäß der zweiten Angabeinformationen der Daten, die zum Ausführen der Operation übertragen werden müssen; und Übertragen der Daten, die für die Operation übertragen werden müssen, und der ersten Angabeinformationen zu der ersten Anwendung, um auszulösen, dass die erste Anwendung die Operation ausführt.

2. Verfahren nach Anspruch 1, wobei das Verfahren nach dem Integrieren der Anzeigezeichenkette in die Schnittstelle der zweiten Anwendung ferner Folgendes umfasst:
Deinstallieren der ersten Anwendung; und
Löschen der Anzeigezeichenkette, die in die Schnittstelle der zweiten Anwendung integriert worden ist.

3. Vorrichtung zum dynamischen Anzeigen einer lokalen Anwendungsschnittstelle, die Folgendes umfasst:
ein Analysemodul (301), das konfiguriert ist, eine Konfigurationsdatei einer ersten Anwendung zu analysieren, um eine Anzeigezeichenkettenkennung der ersten Anwendung zu erhalten;
ein Lesemodul (302), das konfiguriert ist, wenigstens eine Anzeigezeichenkette der ersten Anwendung aus einer Betriebsmitteldatei der ersten Anwendung gemäß der Anzeigezeichenkettenkennung zu lesen; und
ein Anzeigesteuerungsmodul (303), das konfiguriert ist, die wenigstens eine Anzeigezeichenkette auf der lokalen Anwendungsschnittstelle dynamisch anzuzeigen;
**dadurch gekennzeichnet, dass**
die erste Anwendung mehrere Operationen aufweist, wobei jede der wenigstens einen Anzeigezeichenkette einer der mehreren Operationen zugeordnet ist und die Zuordnung jeder der wenigstens einen Anzeigezeichenkette der ersten Anwendung zu der einen der mehreren Operationen in der Konfigurationsdatei der ersten Anwendung vorkonfiguriert ist, wobei:
das Analysemodul ferner konfiguriert ist, die Konfigurationsdatei der ersten Anwendung zu analysieren, um eine zweite Anwendung zu bestimmen; und
das Anzeigesteuerungsmodul insbesondere konfiguriert ist: eine Schnittstelle der zweiten Anwendung gemäß der Anzeigezeichenkette zu aktualisieren; und eine aktualisierte Schnittstelle der zweiten Anwendung anzuzeigen, wobei das Anzeigesteuerungsmodul ferner konfiguriert ist: die Anzeigezeichenkette in die Schnittstelle der zweiten Anwendung zu integrieren, wobei:
das Analysemodul ferner konfiguriert ist, die Konfigurationsdatei der ersten Anwendung zu analysieren, um erste Angabeinformationen zum Angeben einer Operation, die durch die erste Anwendung ausgeführt werden soll, und zweite Angabeinformationen zum Angeben von Daten, die zum Ausführen der Operation übertragen werden müssen, zu erhalten; und
die Vorrichtung ferner Folgendes umfasst:
ein Erhaltemodul (401), das konfiguriert ist, gemäß den zweiten Angabeinformationen, nachdem das Anzeigesteuerungsmodul die Anzeigezeichenkette in die Schnittstelle der zweiten Anwendung integriert hat, die Daten zu erhalten, die zum Ausführen der Operation übertragen werden müssen; und
ein Auslösemodul (402), das konfiguriert ist, die Daten, die für die Operation übertragen werden müssen, und die ersten Angabeinformationen zu der ersten Anwendung zu übertragen, um auszulösen, dass die erste Anwendung die Operation ausführt.

4. Vorrichtung nach Anspruch 3, die ferner Folgendes umfasst:
ein Deinstallationsmodul (501), das konfiguriert ist, die erste Anwendung zu deinstallieren, nachdem das Anzeigesteuerungsmodul die Anzeigezeichenkette in die Schnittstelle der zweiten Anwendung integriert hat; und
ein Löschmodul (502), das konfiguriert ist, die Anzeigezeichenkette, die in die Schnittstelle der zweiten Anwendung integriert worden ist, zu löschen.

## Revendications

1. Procédé d'affichage dynamique d'une interface d'application locale, comprenant les étapes suivantes :
analyser (101) un fichier de configuration d'une première application pour obtenir un identifiant de chaîne d'affichage de la première application ;
lire (102) au moins une chaîne d'affichage de la première application à partir d'un fichier de ressources de la première application conformément à l'identifiant de chaîne d'affichage ; et
afficher dynamiquement (103) l'au moins une chaîne d'affichage sur l'interface d'application locale ;
**caractérisé en ce que** :
la première application a une pluralité d'opérations, chacune de l'au moins une chaîne d'affichage est associée à une de la pluralité d'opérations, et l'association de chacune de l'au moins une chaîne d'affichage de la première application avec l'une de la pluralité d'opérations est préconfigurée dans le fichier de configuration de la première application, où :
lorsque le fichier de configuration de la première application est analysé, une seconde application est en outre déterminée ; et
l'affichage dynamique de la chaîne d'affichage sur l'interface d'application locale comprend les étapes suivantes : mettre à jour une interface de la seconde application conformément à la chaîne d'affichage ; et afficher une interface mise à jour de la seconde application, où la mise à jour de l'interface de la seconde application conformément à la chaîne d'affichage comprend les étapes suivantes :
intégrer la chaîne d'affichage dans l'interface de la seconde application, où :
lorsque le fichier de configuration de la première application est analysé, des premières informations d'indication pour indiquer une opération à exécuter par la première application et des secondes informations d'indication pour indiquer des données qui doivent être transférées pour exécuter l'opération sont en outre obtenues ; et
après intégration de la chaîne d'affichage dans l'interface de la seconde application, le procédé comprend en outre les étapes suivantes : obtenir, conformément aux secondes informations d'indication, les données qui doivent être transférées pour exécuter l'opération ; et transférer les données qui doivent être transférées pour l'opération et les premières informations d'indication à la première application, de manière à déclencher l'exécution de l'opération par la première application.

2. Procédé selon la revendication 1, dans lequel, après l'intégration de la chaîne d'affichage dans l'interface de la seconde application, le procédé comprend en outre les étapes suivantes :
désinstaller la première application ; et
effacer la chaîne d'affichage qui a été intégrée dans l'interface de la seconde application.

3. Appareil d'affichage dynamique d'une interface d'application locale, comprenant :
un module d'analyse (301), configuré pour analyser un fichier de configuration d'une première application pour obtenir un identifiant de chaîne d'affichage de la première application ;
un module de lecture (302), configuré pour lire au moins une chaîne d'affichage de la première application à partir d'un fichier de ressources de la première application conformément à l'identifiant de chaîne d'affichage ; et
un module de contrôle de l'affichage (303), configuré pour afficher dynamiquement l'au moins une chaîne d'affichage sur l'interface d'application locale ;
**caractérisé en ce que** :
la première application a une pluralité d'opérations, chacune de l'au moins une chaîne d'affichage est associée à une de la pluralité d'opérations, et l'association de chacune de l'au moins une chaîne d'affichage de la première application avec l'une de la pluralité d'opérations est préconfigurée dans le fichier de configuration de la première application, où :
le module d'analyse est en outre configuré pour analyser le fichier de configuration de la première application pour déterminer une seconde application ; et
le module de contrôle de l'affichage est spécifiquement configuré pour : mettre à jour une interface de la seconde application conformément à la chaîne d'affichage ; et
afficher une interface mise à jour de la seconde application, où le module de contrôle de l'affichage est en outre configuré pour : intégrer la chaîne d'affichage dans l'interface de la seconde application, où :
le module d'analyse est en outre configuré pour analyser le fichier de configuration de la première application pour obtenir des premières informations d'indication pour indiquer une opération à exécuter par la première application et des secondes informations d'indication pour indiquer des données qui doivent être transférées pour exécuter l'opération ; et
l'appareil comprend en outre :
un module d'obtention (401), configuré pour obtenir, conformément aux secondes informations d'indication, après que le module de configuration d'affichage a intégré la chaîne d'affichage dans l'interface de la seconde opération, les données qui doivent être transférées pour exécuter l'opération ; et
un module de déclenchement (402), configuré pour transférer les données qui doivent être transférées pour l'opération et les premières informations d'indication à la première application, de manière à déclencher l'exécution de l'opération par la première application.

4. Appareil selon la revendication 3, comprenant en outre :
un module de désinstallation (501), configuré pour désinstaller la première application, après que le module de contrôle de l'affichage a intégré la chaîne d'affichage dans l'interface de la seconde application ; et
un module d'effacement (502), configuré pour effacer la chaîne d'affichage qui a été intégrée dans l'interface de la seconde application.
